# EUROPEAN PATENT SPECIFICATION

(11) **EP 3 625 297 B1**
(45) Date of publication and mention of the grant of the patent: **01.07.2026**
(21) Application number: 18802061.4
(22) Date of filing: 18.05.2018
(51) Int. Cl.: C09D 11/023, C09D 11/107, C09D 11/108, C09D 123/08, C09D 123/14, C09J 123/08, C09J 123/14, C08J 7/04, B05D 7/24, B05D 7/04

(54) **COMPOSITIONS INCLUDING COPOLYMER FORMULATIONS FOR IMPROVING ADHESION TO LOW SURFACE ENERGY SUBSTRATES**
ZUSAMMENSETZUNGEN MIT COPOLYMERFORMULIERUNGEN ZUR VERBESSERUNG DER ADHÄSION AN SUBSTRATEN MIT NIEDRIGER OBERFLÄCHENENERGIE
COMPOSITIONS CONTENANT DES FORMULATIONS DE COPOLYMÈRE DESTINÉES À AMÉLIORER L'ADHÉRENCE SUR DES SUBSTRATS À FAIBLE ÉNERGIE DE SURFACE

(30) Priority: 19.05.2017 US 201762509037 P
(43) Date of publication of application: 25.03.2020
(73) Proprietor: Honeywell International Inc., Morris Plains, NJ 07950 (US)
(72) Inventor: JABLON, Michael, Morris Plain, NJ 07950 (US); SMITH, Gerald, Morris Plain, NJ 07950 (US); WHEELER, Mark, Morris Plain, NJ 07950 (US); HACKER, Scott, Morris Plain, NJ 07950 (US); BRAUN, Manfried, Morris Plain, NJ 07950 (US); LEM, Paul, Morris Plain, NJ 07950 (US); SHAH, Jayesh, Morris Plain, NJ 07950 (US); VIG, Rakesh, Morris Plain, NJ 07950 (US)
(74) Representative: Stepney, Gregory John
(86) International application number: PCT/US2018/033501
(87) International publication number: WO 2018/213776

(56) References cited:
- WO-A1-2013/119404
- WO-A1-2015/160939
- US-A- 4 879 333
- US-A1- 2002 061 945
- US-A1- 2008 156 438
- US-A1- 2011 133 134
- US-A1- 2011 200 817
- US-A1- 2015 218 426
- US-A1- 2015 218 426
- US-A1- 2016 024 325

## Description

### CROSS-REFERENCE TO RELATED APPLICATION

The present application claims the benefit of priority to U.S. Provisional Application serial no.: 62/509,037, filed May 19, 2017.

### FIELD OF THE DISCLOSURE

The present disclosure relates to copolymer formulations that may be added to various compositions for improving the adhesion of such compositions to low surface energy substrates, and associated methods. The formulations can be dispersions in solvent, emulsions in water, and copolymers directly added to the various compositions.

### BACKGROUND

Many industrial processes require the application of compositions such as inks, adhesives, coatings, and the like to polyolefin substrates, such as films and the like. The inherent low surface energy of polyolefins, however, inhibits adhesion of most such compositions. Consequently, efforts have been directed toward pretreating the surface of these materials to render them more amenable to the application of such compositions. Such pretreatments include vapor cleaning, defatting, acid treatment, corona discharge treatment, or plasma treatment. Even with these treatments, adequate adhesion has not heretofore been observed. US2015218426A1 and WO2015160939A1 describe high performance water-based adhesion compositions and applications. WO2013119404A1 describes high performance water-based tackified acrylic pressure sensitive adhesives. US2011133134A1 describes crosslinkable and crosslinked compositions of olefin polymers and graphene sheets. US2008156438A1 describes a method of producing adhered substrates.

As such, it would be desirable to provide compositions that have improved adhesion qualities, particularly as applied to low surface energy substrates. Furthermore, other desirable features and characteristics of the inventive subject matter will become apparent from the subsequent detailed description of the inventive subject matter and the appended claims, taken in conjunction with this background of the inventive subject matter.

### BRIEF SUMMARY

The invention is defined by the claims. The ink composition according to claim 1 is intended for application to a low surface energy substrate and has added thereto an amount of a copolymer formulation in order to improve the quality of adhesion between the ink composition and the low surface energy . In further embodiments, substrates being coated with such compositions, and associated methods are disclosed.

The method of claim 6 is intended for improving the adhesion of an ink composition to a low surface energy substrate, wherein the method comprises the steps of: adding an amount of a copolymer formulation to the ink composition; and applying the ink composition with the copolymer formulation added thereto to the low surface energy substrate .

The ink composition of claim 1 comprise: from 1% to 30 % of an oil-in-water emulsion of a copolymer, wherein the copolymer is a propylene/maleic anhydride copolymer.

This brief summary is provided to introduce the invention.

### DESCRIPTION OF THE DRAWING FIGURES

The present disclosure will be better understood along with the following drawing Figures, wherein:
FIGS. 1 - 7, 9, and 11 are photographs showing ink removal during cross-hatch testing of ink formulations in accordance with the present disclosure (right) as compared to a control ink (left); and
FIGS. 8, 10, and 12 are graphs comparing ink removal during cross-hatch testing of ink formulations in accordance with the present disclosure as compared to a control ink.

### DETAILED DESCRIPTION

The following detailed description is merely exemplary in nature and is not intended to limit the single dose pack, or the method for producing or using the same. Furthermore, there is no intention to be bound by any theory presented in the preceding background or the following detailed description.

The term "about" as used in connection with a numerical value throughout the specification and the claims denotes an interval of accuracy, familiar and acceptable to a person skilled in the art. In general, such interval of accuracy is ±10%. Thus, "about ten" means 9 to 11. All numbers in this description indicating amounts, ratios of materials, physical properties of materials, and/or use are to be understood as modified by the word "about," except as otherwise explicitly indicated.

Embodiments of the present disclosure are broadly directed to the use of various copolymer formulations for improving the adhesion of various compositions to low surface energy substrates. Embodiments of the present disclosure are also directed to the various compositions including the various copolymer formulations. Embodiments of the present disclosure are further directed to the low surface energy substrates having applied thereto the various compositions including the various copolymer formulations. Still further, embodiments of the present disclosure are directed to methods of applying the compositions including the various copolymer formulations to the low surface energy substrates.

### Low Surface Energy Substrates

A low surface energy substrate may generally be regarded as a substrate on to which various inks, adhesives, and coatings do not adhere well. This can be quantified in dynes/cm². In particular, aqueous systems such as those noted above have a particularly difficult time adhering to low surface energy substrates, due to the difference in surface energy. For example, water may have a value of greater than about 70 dynes/cm², whereas low surface energy substrates may have values between about 10 and about 20 dynes/cm². Accordingly, the embodiments of the present disclosure are suitable for use with various low surface energy substrates, examples of which may include the following, among others.

High-Density Polyethylene (HDPE) films: One exemplary substrate for use in accordance with the present disclosure is a HDPE film. HDPE is a polyethylene thermoplastic made from the monomer ethylene. HDPE is known for its large strength-to-density ratio. The density of HDPE can range from 0.93 to 0.97 g/cm³. Although the density of HDPE is only marginally higher than that of low-density polyethylene, HDPE has little branching, giving it stronger intermolecular forces and tensile strength that LDPE. The difference in strength exceeds the difference in density, giving HDPE a higher specific strength. It is also harder and more opaque and can withstand somewhat higher temperature. Adhesion of various formulations may be easier on HDPE, as comparted to LDPE, as demonstrated in greater detail, below.

Low-Density Polyethylene (LDPE) films: One exemplary substrate for use in accordance with the present disclosure is LDPE film. LDPE is a thermoplastic made from the monomer ethylene. LDPE is defined by a density range of 0.910-0.940 g/cm³. It is not reactive at room temperatures, except by strong oxidizing agents, and some solvents cause swelling. It can withstand temperatures of 80 °C continuously and 95 °C for a short time. Made in translucent or opaque variations, it is quite flexible and tough. LDPE has more branching (on about 2% of the carbon atoms) than HDPE, so its intermolecular forces (instantaneous-dipole induced-dipole attraction) are weaker, its tensile strength is lower, and its resilience is higher. Also, because its molecules are less tightly packed and less crystalline due to the side branches, its density is lower.

Polypropylene (PP) films: One exemplary substrate for use in accordance with the present disclosure is a PP film. PP is a thermoplastic polymer used in a wide variety of packaging and labelling applications. Polypropylene is in many aspects similar to polyethylene, especially in solution behavior and electrical properties. The additionally present methyl group improves mechanical properties and thermal resistance, while the chemical resistance decreases. The properties of polypropylene depend on the molecular weight and molecular weight distribution, crystallinity, and the isotacticity. The density of PP is between 0.895 and 0.92 g/cm³.

Polyvinyl chloride (PVC) films: One exemplary substrate for use in accordance with the present disclosure is a PVC film. Polyvinyl chloride is produced by polymerization of the vinyl chloride monomer. PVC has high hardness and mechanical properties. The mechanical properties enhance with the molecular weight increasing but decrease with the temperature increasing. The mechanical properties of rigid PVC (uPVC) are very good; the elastic modulus can reach 1500-3,000 MPa. The soft PVC (flexible PVC) elastic is 1.5-15 MPa.

Polyester films: One exemplary substrate for use in accordance with the present disclosure is a polyester (polyethylene terephthalate) film. Polyethylene terephthalate is produced from ethylene glycol and dimethyl terephthalate (DMT) or terephthalic acid. Polyester films are typically semi-rigid to rigid, and relatively light in weight. These films find industrial application in product packaging, for example.

### Optional Substrate Pre-Treatment

Prior to the application of any composition to a low surface energy substrate, the substrate may optionally undergo a pre-treatment process to increase its surface energy. For example, corona treatment is a common method of increasing surface energy on low surface energy substrates to promote adhesion when inks, coatings, and adhesives. Corona treatment systems are made of several components designed to apply a high voltage, high frequency electrical discharge to the substrate. When atmospheric air is exposed to different voltage potentials, electrical discharge can develop. When this occurs, it results in an avalanche effect caused by the collision of neutral molecules and the electrically loaded molecules, which make up the voltage. Upon collision, the neutral molecules become electrically loaded, resulting in a heavily loaded zone or "lightening". This, in turn, creates a heavy oxide mixture of ozone and nitrogen oxides. To avoid this avalanche effect, an isolator is placed between two electrodes. The result is a cloud of ionized air-or the corona discharge-which is then used for surface treatment of substrate materials.

When a substrate material is placed under the corona discharge, the electrons generated in the discharge impact on the treatment surface with energies two to three times that necessary to break the molecular bonds on the surface of most substrates. The resulting free radicals react rapidly with the oxidating products of corona discharge, or with adjoining free radicals on the same or different chain, resulting in a cross-link. Oxidation of the solid surface increases the surface energy, allowing for better wetting by liquids and promoting adhesion.

### Compositions Applied to the Low Surface Energy Substrates

The embodiments of the present disclosure contemplate the application of various inks, adhesives, and coatings to the above-described low surface energy substrates, such as those described as follows, among others.

Gravure ink: Gravure is a major commercial printing processes that can be used to print, on a substrate such as those described above. Text and images can be printed. Gravure is an intaglio process wherein ink is transferred to the paper as drops from very small cells that are recessed into a printing surface, e.g., a cylinder or flat plate. The ink drops flow and selectively spread together to print the text or image. If the surface tension of the ink drop is too high, the ink will not spread quick or far enough causing the print to appear rough and grainy. Gravure is distinguished from other processes such as letterpress printing and lithography. Gravure inks are very fluid, solvent or co-solvent based inks that dry by evaporation to leave a film of resin and pigment on the substrate. Representative solvents and co-solvents include toluene, xylene, alcohols, acetone, aliphatic hydrocarbons, water, and the like.

Flexographic ink: A flexographic printing ink will generally contain a pigment and a binder resin dispersed in water. The binder serves as a carrier for the pigment and affixes the pigment to the surface to be printed. A wide variety of binder systems have been used for flexographic ink compositions, including acrylic and methacrylic polymers and copolymers, rosin modified phenolic resins, polystyrene resins and soy protein. Flexographic printing systems are generally systems having rubber or photopolymer plates, reverse-angle doctor blades, and ceramic anilox rollers in central impression cylinder presses. Flexographic presses can be used to print on the substrate materials as described above. Because flexographic printing systems can use water soluble or water-based ink compositions which are less expensive than oil-based ink compositions, flexographic printing typically costs less than lithographic printing.

Paste Inks for Offset Printing: Offset printing uses inks that, compared to other printing methods, are highly viscous, thick, and tacky. Typical inks have a dynamic viscosity of 40-100 Pa· s. There are many types of paste inks available for utilization in offset lithographic printing. These include heat-set, cold-set, and energy-curable (or EC), such as ultraviolet- (or UV-) curable, and electron beam- (or EB-) curable. Heat-set inks are the most common variety and are "set" by applying heat and then rapid cooling to catalyze the curing process. Energy-curable inks are the highest-quality offset litho inks and are set by application of light energy.

Hot Melt Adhesives: Hot-melt adhesives are thermoplastic materials that are typically solid at room temperature and are denoted by the abbreviation "HMA". Hot melt adhesives are widely used in industry for various applications such as product assembly, packaging, hygiene and elastic attachment, lamination, case and carton sealing, bookbinding and applications in the construction bonding, furniture, and textile industries, profile wrapping, and the like. Various HMA's have different weaknesses relating to adhesion to certain substrates and adhesion at different temperatures. For instance, hot melt adhesives based on metallocene ethylene octene copolymers ("mEO"), which are advantageous for their low odor, high clarity, and ease of use, often exhibit poor adhesion to difficult substrates (such as those defined herein), particularly at low temperatures such as refrigerator or freezer temperatures. Further, hot melt adhesives based on ethylene-vinyl acetate copolymer ("EVA") may exhibit some of the same adhesion problems.

Pressure-Sensitive Adhesives: A pressure-sensitive adhesive (PSA) is an adhesive that bonds with an adherent when pressure is applied to it. PSAs contrast, for example, with adhesives that are activated by heat, irradiation, or a chemical reaction. PSAs can be applied to a substrate as an emulsion or dispersion, which is then dried to remove a liquid carrier. Alternatively, PSAs can be applied as a solid that is then heated to reduce its viscosity. Typical PSA compositions for paper labels are water-based dispersions that primarily contain an elastomer and a tackifier. Usually, the elastomer used in these formulations is an acrylate polymer and the tackifier is based on rosin ester. The high molecular weight acrylate polymer provides the formulation with elasticity, cohesion and resistance to shear, while the viscous, low molecular weight tackifier makes the formulation more adhesive.

Overprint Varnish (OPV): An OPV is a varnish applied to a printed piece as a coating after printing, in contrast to the application of varnish to the formulation of the ink vehicle itself before printing. Overprint varnishing is typically performed-either on-press or as part of the finishing processes-for aesthetic purposes or to protect the printing from moisture, abrasion, or other potential sources of damage.

### Copolymer Formulations Added to the Compositions for Improved Adhesion

As described herein, various copolymer formulations may be added to any of the compositions described above, for purposes of improving the adhesion of the compositions to the aforementioned low surface energy substrates. The copolymer formulations may be provided as emulsions. The various copolymer formulations include, among others, the following.

Described herein are oil-in-water emulsions of ethylene acrylic acid (E/AA) copolymer: (1) An oil-in- water emulsion of an ethylene acrylic acid copolymer having active solids of 40 - 50% and Brookfield viscosity at 25 °C of about 150cp. This copolymer formulation is available from Honeywell International Inc. as Cohesa^{®} 0001. (2) An oil-in-water emulsion of a blend of functional synthetic waxes, with oxidized polyethylene solids of 30 - 40%, ethylene acrylic acid copolymer solids of 5 - 15%, and a Brookfield viscosity at 25 °C of about 500cp. This copolymer formulation is available from Honeywell International Inc. as Cohesa^{®} 0002. (3) A surfactant-free oil-in-water emulsion of an ethylene acrylic acid copolymer having active solids of 30 - 50% and a Brookfield viscosity at 25 °C of about 100cp. This copolymer formulation is available from Honeywell International Inc. as Cohesa^{®} 3050. (4) Further surfactant-free oil-in-water emulsions of an ethylene acrylic acid copolymer, having active solids of about 25 - 60%, and viscosities within the range of 75cp to about 750cp (Brookfield viscosity at 25 °C) are available from Honeywell International Inc. as Cohesa^{®} 1020, 3055, 3060, and 3080. Accordingly, in general, some of the oil-in-water emulsions of E/AA copolymer suitable for use herein are those that have an active solids content of about 25 - 60% and a Brookfield viscosity at 25 °C of about 75cp to about 750cp.

Described herein are ethylene acrylic acid (E/AA) copolymer synthetic waxes (which may be provided in the form of an emulsion): (1) An ethylene acrylic acid copolymer synthetic wax having an ASTM D-5 hardness of 2.0dmm, a viscosity at 140 °C of 575cp, a density of 0.93 g/cm³, and an acid number of 40, wherein the AA content is about 5%. This copolymer formulation is available from Honeywell International Inc. as A-C^{®} 540. (2) An ethylene acrylic acid copolymer synthetic wax having an ASTM D-5 hardness of 4.0dmm, a viscosity at 140 °C of 650cp, a density of 0.93 g/cm³, and an acid number of 75, wherein the AA content is about 10%. This copolymer formulation is available from Honeywell International Inc. as A-C^{®}
580. (3) An ethylene acrylic acid copolymer synthetic wax having an ASTM D-5 hardness of 8.0dmm, a viscosity at 140 °C of 600cp, a density of 0.93 g/cm³, and an acid number of 120, wherein the AA content is about 15%. This copolymer formulation is available from Honeywell International Inc. as A-C^{®} 5120. (4) An ethylene acrylic acid copolymer synthetic wax having an ASTM D-5 hardness of 7.0dmm, a viscosity at 140 °C of 1100cp, and an acid number of 135. This copolymer formulation is available from Honeywell International Inc. as A-C^{®} 5135. (5) An ethylene acrylic acid copolymer synthetic wax having an ASTM D-5 hardness of 10dmm, a viscosity at 140 °C of 1000cp, and an acid number of 150. This copolymer formulation is available from Honeywell International Inc. as A-C^{®} 5150. (6) An ethylene acrylic acid copolymer synthetic wax having an ASTM D-5 hardness of 50dmm, a viscosity at 140 °C of 625cp, a density of 0.93 g/cm³, and an acid number of 200, wherein the AA content is about 20%. This copolymer formulation is available from Honeywell International Inc. as A-C^{®} 5180. (7) Further ethylene acrylic acid copolymer synthetic waxes, having an ASTM D-5 hardness from 1.0 to 100dmm, viscosity at 140 °C from 500 - 1500, a density from 0.91 to 0.95 g/cm³, an acid number from 5 to 200, and an AA content of from <1 - 25%, are available from Honeywell International Inc. as A-C^{®} 505, 510, and 520. Accordingly, in general, some of the ethylene acrylic acid copolymer synthetic waxes suitable for use herein are those that have an ASTM D-5 hardness from 1.0 to 100dmm, viscosity at 140 °C from 500 - 1500, a density from 0.91 to 0.95 g/cm³, an acid number from 20 to 200, and an AA content of from 5 - 30%.

Propylene maleic anhydride copolymers of the invention are prepared in the form of an emulsion: A propylene maleic anhydride copolymer, which may be provided in anionic or nonionic emulsions, having an ASTM D-5 hardness of less than 0.5dmm, viscosity at 190 °C of 350cp, a Mettler drop point of 141 °C, and a density of 0.94 g/cm³. This copolymer formulation is available from Honeywell International Inc. as A-C^{®} 597P.

### Adding the Copolymer Formulations to the Compositions

As described herein, the above-described copolymer formulations are added to the above-described compositions that may be applied to low surface energy substrates. The amount of the copolymer formulation added to a composition is based on the weight of copolymer solids added compared with total composition weight excluding copolymer. The copolymer formulations is added from 1% to 30% on this basis, or from about 2% to about 25%, or from about 2% to about 15%. In particular examples, the amount may be any of 2%, 5%, 10%, or 15%, on this basis.

The copolymer formulations may be added to the compositions using any suitable mixing technique, such as high-speed mixing for a time period that may range from several minutes to several hours, such as from about 1 minute to about 30 minutes. The temperature at which mixing is performed may be anywhere from room temperature (for example, 20 °C) to about 180 °C, or higher, depending on the particular composition and the particular copolymer formulation to be added thereto.

### Application to Low Surface Energy Substrates - Illustrative Examples

In accordance with embodiments of the present disclosure, the above-described mixture of compositions and copolymer formulations may be applied to the above-described low surface energy substrates. This application process may be performed using any conventional technique appropriate to the particular composition in question. For example, gravure and flexographic inks are applied by contacting the substrate with a printing surface, and so forth. In some embodiments, the substrates were treated with a corona treatment prior to the application of the mixture.

Testing was performed on the substrates with the above-described mixture thereto, and also on substrates with conventional compositions (without the copolymer formulations) applied thereto as a control. The copolymers formulations were all provided as 40% polymer solids oil-in-water emulsions of the copolymer. An amount of the copolymer formulations was then added to the inks of achieve copolymer solids weight loadings, on the basis of the weight of the ink, of either 2%, 5%, 10%, or 15%, as specified below. A cross-hatch adhesion test protocol was employed using a conventional tape to attempt to remove the inks/coatings after applied, in order to determine the quality of adhesion to the substrate. The cross-hatch test was similar to ASTM-D3359, using 610 tape available from 3M Inc. Depending on the particular composition, the particular copolymer formulation added to the composition, and the particular substrate, the testing revealed in increase over the control of anywhere from 5% to 100%, on the basis of the amount of coating able to be removed from the substrate according to the above-noted cross-hatch adhesion testing protocol.

### (a) - Testing Different Substrates

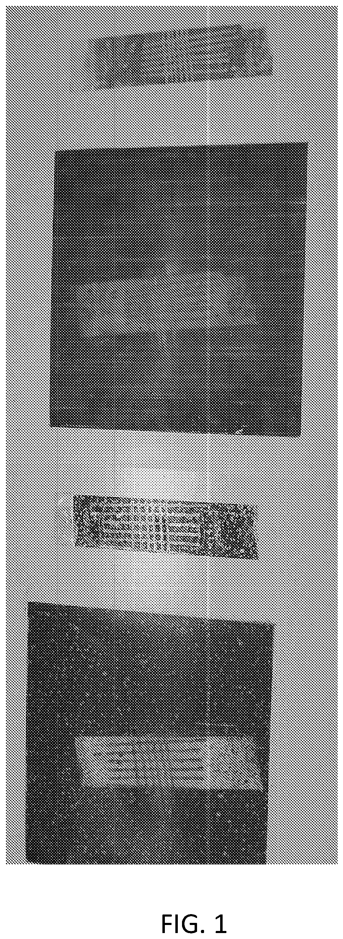

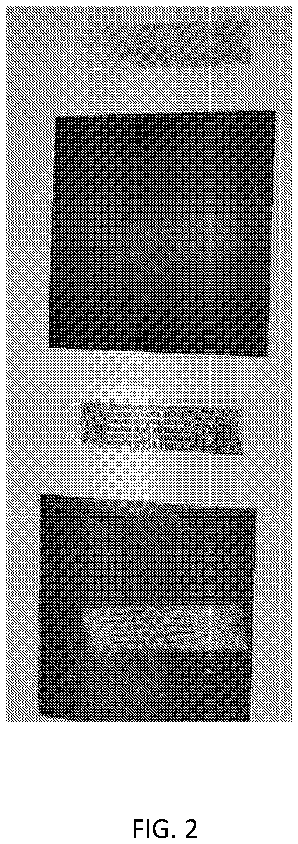

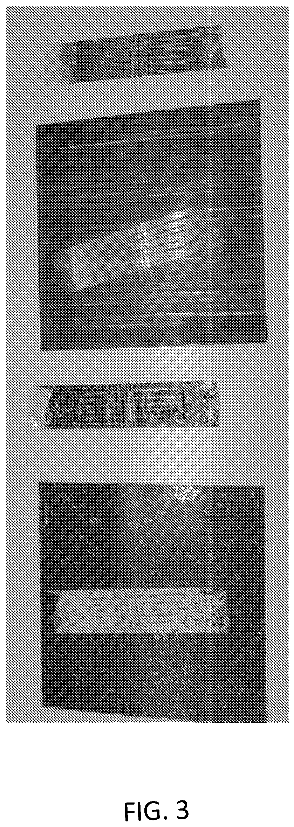

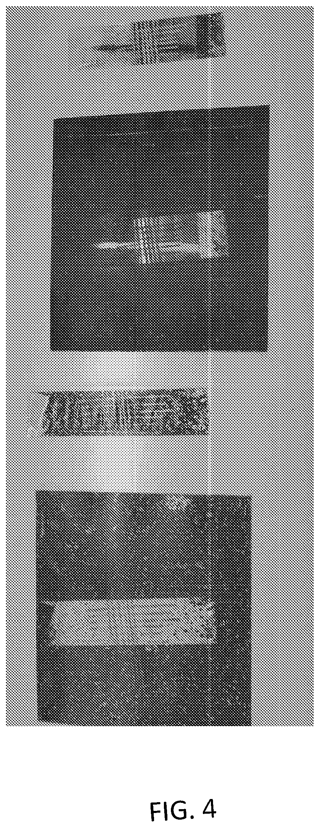

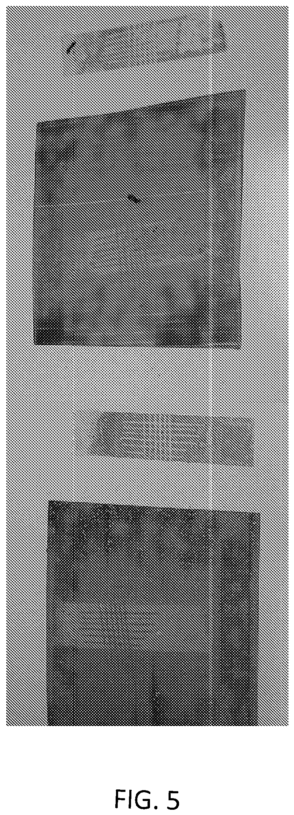

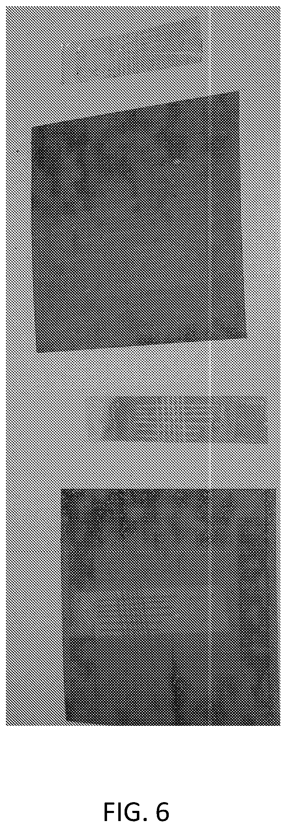

Beneficial results of adding the aforementioned copolymer emulsions has been demonstrated across a range of different low surface energy substrates.
(a-1) In accordance with the foregoing testing procedure, aqueous publication gravure green ink was applied to corona treated HDPE film, wherein a control ink had no copolymer added thereto, and wherein an ink in accordance with the present disclosure had A-C 5150 added on a 15 wt.-% polymer solids-to-ink loading basis. When the above-noted cross-hatch test was performed, as illustrated in FIG. 1, the control ink (left) was 90% removed, whereas the inventive ink formulation (right) only had 45% removed.
(a-2) In accordance with the foregoing testing procedure, aqueous publication gravure green ink was applied to corona treated HDPE film, wherein a control ink had no copolymer added thereto, and wherein an ink in accordance with the present disclosure had A-C 5180 added on a 15 wt.-% polymer solids-to-ink loading basis. When the above-noted cross-hatch test was performed, as illustrated in FIG. 2, the control ink (left) was 90% removed, whereas the inventive ink formulation (right) only had 15% removed.
(a-3) In accordance with the foregoing testing procedure, aqueous publication gravure green ink was applied to corona treated polypropylene film, wherein a control ink had no copolymer added thereto, and wherein an ink in accordance with the present disclosure had A-C 5150 added on a 15 wt.-% polymer solids-to-ink loading basis. When the above-noted cross-hatch test was performed, as illustrated in FIG. 3, the control ink (left) was 95% removed, whereas the inventive ink formulation (right) only had 80% removed.
(a-4) In accordance with the foregoing testing procedure, aqueous publication gravure green ink was applied to corona treated polypropylene film, wherein a control ink had no copolymer added thereto, and wherein an ink in accordance with the present disclosure had A-C 5180 added on a 15 wt.-% polymer solids-to-ink loading basis. When the above-noted cross-hatch test was performed, as illustrated in FIG. 4, the control ink (left) was 95% removed, whereas the inventive ink formulation (right) only had 50% removed.
(a-5) In accordance with the foregoing testing procedure, aqueous publication gravure green ink was applied to corona treated PVC film, wherein a control ink had no copolymer added thereto, and wherein an ink in accordance with the present disclosure had A-C 5150 added on a 15 wt.-% polymer solids-to-ink loading basis. When the above-noted cross-hatch test was performed, as illustrated in FIG. 5, the control ink (left) was 70% removed, whereas the inventive ink formulation (right) only had 35% removed.
(a-6) In accordance with the foregoing testing procedure, aqueous publication gravure green ink was applied to corona treated PVC film, wherein a control ink had no copolymer added thereto, and wherein an ink in accordance with the present disclosure had A-C 5180 added on a 15 wt.-% polymer solids-to-ink loading basis. When the above-noted cross-hatch test was performed, as illustrated in FIG. 6, the control ink (left) was 70% removed, whereas the inventive ink formulation (right) only had 10% removed.

### (b) - Testing Different Copolymer Loading Levels

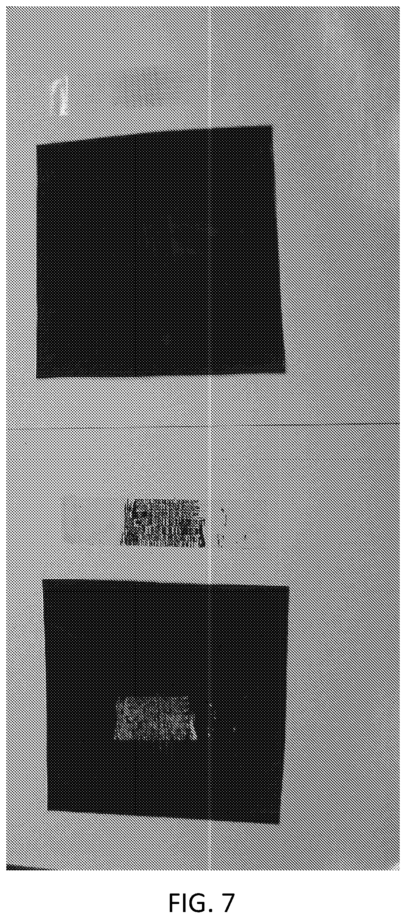

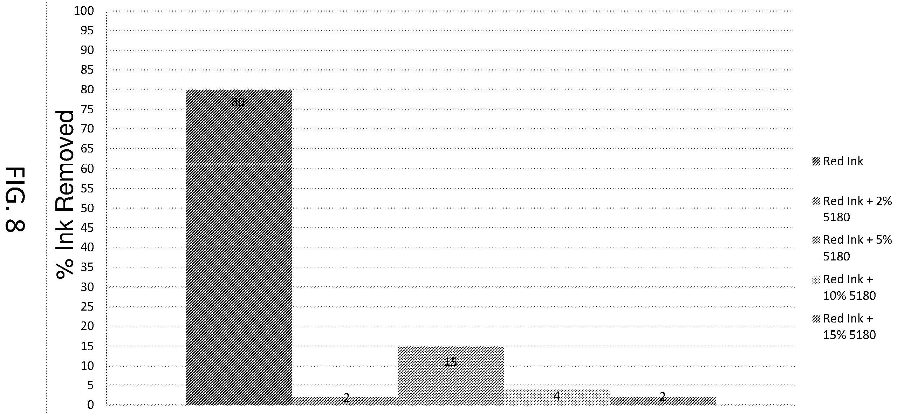

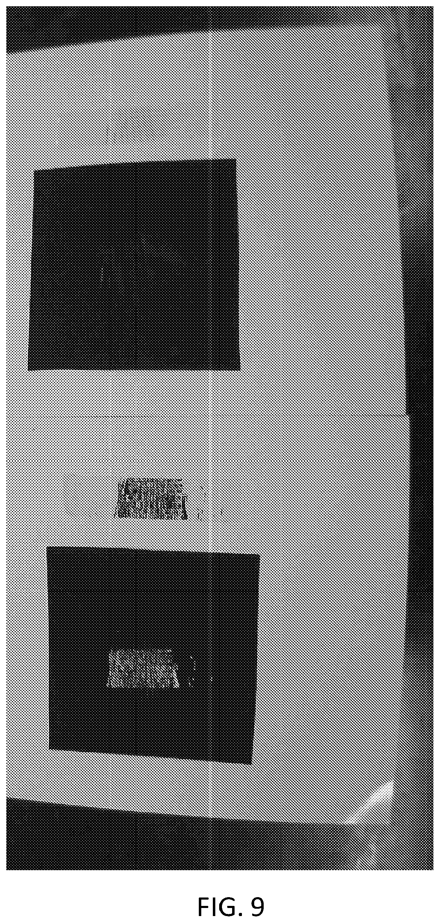

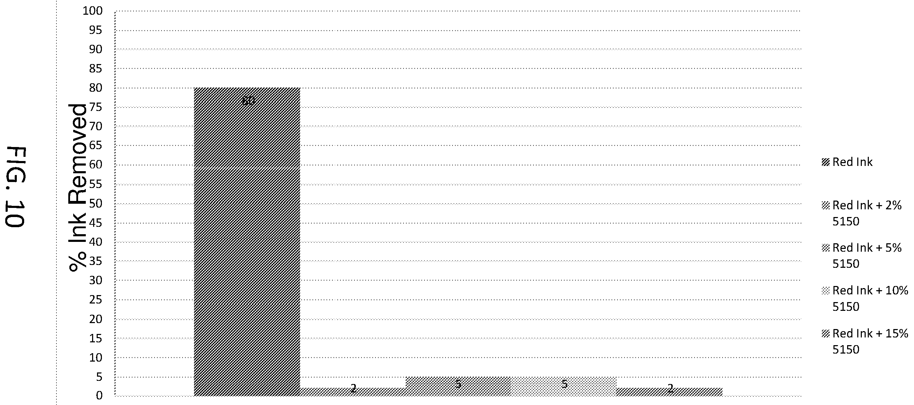

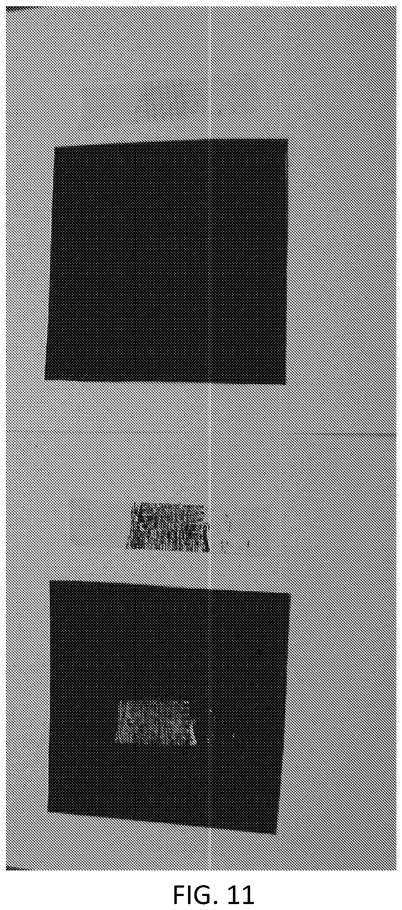

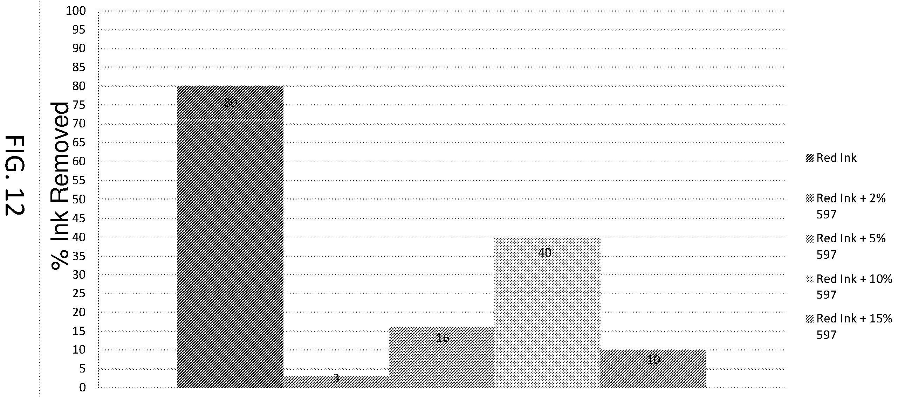

(b-1) In accordance with the foregoing testing procedure, aqueous flexographic red ink was applied to a polyester film without corona treatment, wherein a control ink had no copolymer added thereto, and wherein inks in accordance with the present disclosure had A-C 5180 added on a 2, 5, 10, and 15 wt.-% polymer solids-to-ink loading basis. When the above-noted cross-hatch test was performed, the control ink was 80% removed, whereas the inventive ink formulations only had the following percentages removed: 2% loading, 2% removed; 5% loading, 15% removed; 10% loading, 4% removed; 15% loading, 2% removed. As an example of these results, FIG. 7 shows the control ink (left) and the 2% loaded ink (right). These results are summarized in the graph shown in FIG. 8.
(b-2) In accordance with the foregoing testing procedure, aqueous flexographic red ink was applied to a polyester film without corona treatment, wherein a control ink had no copolymer added thereto, and wherein inks in accordance with the present disclosure had A-C 5150 added on a 2, 5, 10, and 15 wt.-% polymer solids-to-ink loading basis. When the above-noted cross-hatch test was performed, the control ink was 70% removed, whereas the inventive ink formulations only had the following percentages removed: 2% loading, 2% removed; 5% loading, 5% removed; 10% loading, 5% removed; 15% loading, 2% removed. As an example of these results, FIG. 9 shows the control ink (left) and the 2% loaded ink (right). These results are summarized in the graph shown in FIG. 10.
(b-3) In accordance with the foregoing testing procedure, aqueous flexographic red ink was applied to a polyester film without corona treatment, wherein a control ink had no copolymer added thereto, and wherein inks in accordance with the present disclosure had A-C 597P added on a 2, 5, 10, and 15 wt.-% polymer solids-to-ink loading basis. When the above-noted cross-hatch test was performed, the control ink was 70% removed, whereas the inventive ink formulations only had the following percentages removed: 2% loading, 3% removed; 5% loading, 16% removed; 10% loading, 40% removed; 15% loading, 10% removed. As an example of these results, FIG. 11 shows the control ink (left) and the 2% loaded ink (right). These results are summarized in the graph shown in FIG. 12.

As such, it has been shown that the benefits of the present disclosure are observed across a wide range of substrates and using various levels of copolymer loading. Also note that various copolymers were tested on those substrates and at those levels, as well as two different inks having been tested. Moreover, the benefits have been demonstrated with and without corona treatment of the substrate. Thus, it can be included that the beneficial results would be fairly expected across the full range of our disclosure herein as pertaining to different substrates, different copolymers, different inks, and different loading levels.

Accordingly, the present disclosure has provided copolymer formulations that may be added to various compositions for improving the adhesion of such compositions to low surface energy substrates. While at least one exemplary embodiment has been presented in the foregoing detailed description of the inventive subject matter, it should be appreciated that a vast number of variations exist. It should also be appreciated that the exemplary embodiment or exemplary embodiments are only examples, and are not intended to limit the scope, applicability, or configuration of the inventive subject matter in any way. Rather, the foregoing detailed description will provide those skilled in the art with a convenient road map for implementing an exemplary embodiment of the inventive subject matter. It being understood that various changes may be made in the function and arrangement of elements described in an exemplary embodiment without departing from the scope of the inventive subject.

## Claims

1. An ink composition for application to a low surface energy substrate, wherein the low surface energy substrate is a thermo-polymer film chosen from: high-density polyethylene, low- density polyethylene, polyvinyl chloride, polyester, or polypropylene, and wherein the ink composition comprises:
a copolymer formulation, wherein the copolymer formulation consists of an oil-in-water emulsion of a propylene/maleic anhydride copolymer, and wherein the amount of the copolymer formulation is from 1% to 30% on the basis of the solids weight of the copolymer formulation compared to the total weight of the ink composition excluding the copolymer.

2. The ink composition of claim 1, wherein the oil-in-water emulsion of a propylene/ maleic anhydride copolymer has an ASTM D-5 hardness of less than 0.5dmm, a viscosity at 190 °C of 350cp, a Mettler drop point of 141 °C, and a density of 0.94 g/cm³.

3. The ink composition of claim 1, wherein the amount of the copolymer formulation is from 2% to 15% on the basis of the solids weight of the copolymer formulation compared to the total weight of the ink composition excluding the copolymer.

4. A method for improving the adhesion of an ink composition to a low surface energy substrate, wherein the low surface energy substrate is a thermo-polymer film chosen from: high-density polyethylene, low-density polyethylene, polyvinyl chloride, polyester, or polypropylene, and wherein the method comprises the steps of:
adding an amount of a copolymer formulation to the ink composition; and
applying the ink composition with the copolymer formulation added thereto to the low surface energy substrate;
wherein the copolymer formulation consists of an oil-in-water emulsion of propylene/ maleic anhydride copolymer; and
wherein the amount of the copolymer formulation is from 1% to 30% on the basis of the solids weight of the copolymer formulation compared to the total weight of the ink composition excluding the copolymer.

5. The method of claim 6, wherein the oil-in-water emulsion of the propylene/ maleic anhydride copolymer has an ASTM D-5 hardness of less than 0.5dmm, a viscosity at 190 °C of 350cp, a Mettler drop point of 141 °C, and a density of 0.94 g/cm3.

## Patentansprüche

1. Tintenzusammensetzung zum Auftragen auf ein Substrat mit geringer Oberflächenenergie, wobei das Substrat mit geringer Oberflächenenergie eine Thermopolymerfolie ist, ausgewählt aus: Polyethylen hoher Dichte, Polyethylen niedriger Dichte, Polyvinylchlorid, Polyester oder Polypropylen, und wobei die Tintenzusammensetzung umfasst:
Copolymerformulierung, wobei die Copolymerformulierung aus einer Öl-in-Wasser-Emulsion eines Propylen/Maleinsäureanhydrid-Copolymers besteht und wobei die Menge der Copolymerformulierung 1 % bis 30 % auf der Grundlage des Feststoffgewichts der Copolymerformulierung verglichen mit dem Gesamtgewicht der Tintenzusammensetzung ohne das Copolymer beträgt.

2. Tintenzusammensetzung nach Anspruch 1, wobei die Öl-in-Wasser-Emulsion eines Propylen/Maleinsäureanhydrid-Copolymers eine Härte nach ASTM D-5 von weniger als 0,5 dmm, eine Viskosität bei 190 °C von 350 cP, einen Mettler-Tropfpunkt von 141 °C und eine Dichte von 0,94 g/cm³ aufweist.

3. Tintenzusammensetzung nach Anspruch 1, wobei die Menge der Copolymerformulierung 2 % bis 15 % auf der Grundlage des Feststoffgewichts der Copolymerformulierung verglichen mit dem Gesamtgewicht der Tintenzusammensetzung ohne das Copolymer beträgt.

4. Verfahren zum Verbessern der Haftung einer Tintenzusammensetzung auf einem Substrat mit geringer Oberflächenenergie, wobei das Substrat mit geringer Oberflächenenergie eine Thermopolymerfolie ist, ausgewählt aus: Polyethylen hoher Dichte, Polyethylen niedriger Dichte, Polyvinylchlorid, Polyester oder Polypropylen, und wobei das Verfahren die folgenden Schritte umfasst:
Hinzufügen einer Menge einer Copolymerformulierung zu der Tintenzusammensetzung; und
Auftragen der Tintenzusammensetzung mit der hinzugefügten Copolymerformulierung auf das Substrat mit geringer Oberflächenenergie;
wobei die Copolymerformulierung aus einer Öl-in-Wasser-Emulsion eines Propylen/Maleinsäureanhydrid-Copolymers besteht; und
wobei die Menge der Copolymerformulierung 1 % bis 30 % auf der Grundlage des Feststoffgewichts der Copolymerformulierung verglichen mit dem Gesamtgewicht der Tintenzusammensetzung ohne das Copolymer beträgt.

5. Verfahren nach Anspruch 6, wobei die Öl-in-Wasser-Emulsion des Propylen/Maleinsäureanhydrid-Copolymers eine Härte nach ASTM D-5 von weniger als 0,5 dmm, eine Viskosität bei 190 °C von 350 cP, einen Mettler-Tropfpunkt von 141 °C und eine Dichte von 0,94 g/cm³ aufweist.

## Revendications

1. Composition d'encre pour application sur un substrat à faible énergie de surface, dans laquelle le substrat à faible énergie de surface est un film thermopolymère choisi parmi : polyéthylène haute densité, polyéthylène basse densité, polychlorure de vinyle, polyester ou polypropylène, et dans laquelle la composition d'encre comprend :
une formulation de copolymère, dans laquelle la formulation de copolymère consiste en une émulsion huile dans eau d'un copolymère propylène/anhydride maléique, et dans laquelle la quantité de la formulation de copolymère est de 1 % à 30 % sur la base du poids des solides de la formulation de copolymère par rapport au poids total de la composition d'encre à l'exclusion du copolymère.

2. Composition d'encre selon la revendication 1, dans laquelle l'émulsion huile dans eau d'un copolymère propylène/anhydride maléique a une dureté ASTM D-5 de moins de 0,5 dmm, une viscosité à 190 °C de 350 cP, un point de goutte Mettler de 141 °C et une densité de 0,94 g/cm³.

3. Composition d'encre selon la revendication 1, dans laquelle la quantité de la formulation de copolymère est de 2 % à 15 % sur la base du poids des solides de la formulation de copolymère par rapport au poids total de la composition d'encre à l'exclusion du copolymère.

4. Procédé d'amélioration de l'adhérence d'une composition d'encre à un substrat à faible énergie de surface, dans lequel le substrat à faible énergie de surface est un film thermopolymère choisi parmi : polyéthylène haute densité, polyéthylène basse densité, polychlorure de vinyle, polyester ou polypropylène, et dans lequel le procédé comprend les étapes de :
ajout d'une quantité d'une formulation de copolymère à la composition d'encre ; et
application de la composition d'encre, à laquelle a été ajoutée la formulation de copolymère, sur le substrat à faible énergie de surface ;
dans lequel la formulation de copolymère consiste en une émulsion huile dans eau de copolymère propylène/anhydride maléique ; et
dans lequel la quantité de la formulation de copolymère est de 1 % à 30 % sur la base du poids des solides de la formulation de copolymère par rapport au poids total de la composition d'encre à l'exclusion du copolymère.

5. Procédé selon la revendication 6, dans lequel l'émulsion huile dans eau du copolymère propylène/anhydride maléique a une dureté ASTM D-5 de moins de 0,5 dmm, une viscosité à 190 °C de 350 cP, un point de goutte Mettler de 141 °C et une densité de 0,94 g/cm³.
